(19) **Europäisches Patentamt**
**European Patent Office**
**Office européen des brevets**

(11) Veröffentlichungsnummer: **0 278 946**
**A1**

(12) **EUROPÄISCHE PATENTANMELDUNG**

(21) Anmeldenummer: 88890023.0

(22) Anmeldetag: 02.02.88

(51) Int. Cl.⁴: **G 01 F 1/76**
G 01 F 1/78, G 01 F 1/84

(30) Priorität: 10.02.87 AT 275/87

(43) Veröffentlichungstag der Anmeldung:
17.08.88 Patentblatt 88/33

(84) Benannte Vertragsstaaten:
AT BE CH DE FR GB IT LI LU NL

(71) Anmelder: Kastner, Dietrich
Remserstrasse 1
A-4300 St. Valentin (AT)

(72) Erfinder: Kastner, Dietrich
Remserstrasse 1
A-4300 St. Valentin (AT)

(74) Vertreter: Hübscher, Heiner, Dipl.-Ing. et al
Spittelwiese 7
A-4020 Linz (AT)

(54) Vorrichtung zur Massebestimmung pump- und fliessfähiger Nahrungsmittel, insbesondere Milch.

(57) Eine Vorrichtung (1) zur Massebestimmung pump- und fließfähiger Nahrungsmittel weist eine Förderanlage (1c) mit einer über Meßgeräte (1b) und Steuerungsorgane (6, 15) führenden Förderleitung (14) auf.

Um auf rationelle Weise eine von Dichteunterschieden der Flüssigkeit, Schwankungen der Strömungsgeschwindigkeit u.dgl. weitgehend unabhängige Massebestimmung auch kleiner Flüssigkeitsmengen zu erreichen, umfaßt die Förderanlage (1c) eine Maßraumbegrenzungseinrichtung (1a) und in die Förderleitung (14) ist ein Masse-Durchflußmesser (1b) eingebunden.

**Beschreibung**

Vorrichtung zur Massebestimmung pump- und fließfähiger Nahrungsmittel, insbesondere Milch

Die Erfindung bezieht sich auf eine Vorrichtung zur Massebestimmung pump- und fließfähiger Nahrungsmittel, insbesondere Milch, mit einer Förderanlage, die eine über Meßgeräte und Steuerungsorgane führende Förderleitung aufweist.

Wie aus der GB-A 1 345 974 hervorgeht, gibt es bereits Massebestimmungsgeräte für Flüssigkeiten, die unmittelbar die Masse einer durch eine Förderleitung gepumpte Flüssigkeit anzeigen können. Diese Geräte setzen sich allerdings aus einem eigenen Volumenmesser und einem eigenen Dichtemesser zusammen, die in Serie nacheinander in die Förderleitung eingebunden sind. Ein Computer verarbeitet dabei die digital anfallenden Daten des Volumenmessers mit den analog anfallenden Daten des Dichtemessers zur Massebestimmung, so daß hier, abgesehen vom Aufwand für die erforderliche Einzelmessung von Volumen und Dichte, geringe Dichteunterschiede und recht gleichmäßige Durchflußgeschindigkeiten Voraussetzung für brauchbare Meßergebnisse sind, die darüber hinaus von vornherein nur bei größeren Flüssigkeitsvolumina erwartet werden können.

Es gibt auch schon gyroskopische Durchflußmesser, die zur Überwachung von Öl-Pipelines eingesetzt werden und kontinuierlich die Dichte des durchfließenden Öls angeben. Eine Verwendung dieser Durchflußmesser in der Milchwirtschaft od.dgl. ist aber bisher unbekannt.

Der Erfindung liegt daher die Aufgabe zugrunde, eine Vorrichtung zur Massebestimmung der eingangs geschilderten Art zu schaffen, die vergleichsweise einfach aufgebaut ist, störunanfällig arbeitet und vor allem auch kleine Flüssigkeitsmengen mit gewünschter Genauigkeit und praktisch unabhängig von Dichteschwankungen, Durchflußgeschwindigkeiten u.dgl. zu erfassen erlaubt.

Die Erfindung löst diese Aufgabe durch die Kombination der Merkmale, daß die Förderanlage eine Maßraumbegrenzungseinrichtung umfaßt und in die Förderleitung ein Masse-Durchflußmesser eingebunden ist. Der gyroskopische Durchflußmesser erlaubt die direkte Massebestimmung der durchfließenden Flüssigkeit und die Maßraumbegrenzung macht eine sehr genaue Mengenbestimmung möglich, so daß durch die Kombination von Durchflußmesser und Maßraumbegrenzung das rationale Erfassen der Masse auch kleiner Flüssigkeitsmengen mit großer Genauigkeit gewährleistet ist, ohne auf Grund von Dichteunterschieden, ungleichmäßigen Strömungsgeschwindigkeiten u.dgl. Fehlmessungen befürchten zu müssen. Als Masse-Durchflußmesser hat sich beispielsweise der von der Firma Danfoss, Nordborg, Dänemark unter dem Namen "MASSFLO" hergestellte gyroskopische Masse-Durchflußmesser bestens bewährt, der im wesentlichen aus zwei parallelen Meßrohren besteht, die elektromagnetisch zu Schwingungen in Resonanzfrequenz erregt werden, wobei Sensoren das Schwingungsverhalten überwachen. Ein Durchfluß durch die Meßrohre führt unter dem Einfluß der Corioliskraft zu einer Änderung des Schwingungsverhaltens, das sich in einer Phasenverschiebung der von den Sensoren abgegebenen Meßsignale bemerkbar macht. Diese Phasenverschiebung ist proportional zum Massedurchfluß, so daß sich damit die Masse der die Meßrohre durchströmenden Flüssigkeit sehr genau und unabhängig von Temperatur, Dichte, Druck, Viskosität u.dgl. bestimmen läßt. Der Masse-Durchflußmesser kann dabei platzsparend und aufwandsarm an jeder geeigneten Stellen in die Förderleitung eingebaut werden, er ist funktionssicher im Betrieb und problemlos in der Handhabung.

Der Masse-Durchflußmesser läßt sich an und für sich mit einer beliebigen Maßraumbegrenzungseinrichtung kombinieren, und für eine Abgabemessung, bei der der Durchflußmesser in der Abgabeleitung sitzt, genügt beispielsweise ein abgabeseitiges Absperrventil. Besonders zweckmäßig ist es aber, wenn die Maßraumbegrenzung ein Vorlaufgefäß mit einer Füllstandsanzeige, beispielsweise ein Schauglas, vor und eine Kontrollschauglaus od.dgl. nach dem Masse-Durchflußmesser aufweist, da diese Maßraumbegrenzungseinrichtung auch eine genaue Massebestimmung bei Übernahme einer Flüssigkeitsmenge erlaubt. Die übernommene Flüssigkeit fließt über das Vorlaufgefäß, wobei der Füllstand des Vorlaufgefäßes vor der Übernahme als Ausgangswert dient, der nach Durchfluß der übernommenen Flüssigkeitsmenge durch den Durchflußmesser wieder erreicht sein muß, um sicher zu sein, daß genau die übernommene Flüssigkeitsmenge auch durch den Masse-Durchflußmesser geflossen ist und tatsächlich die dieser übernommenen Flüssigkeitsmenge entsprechende Masse gemessen wurde. Das Kontrollschauglas od.dgl. Gerät nach dem Masse-Durchflußmesser ermöglicht eine Kontrolle der Leitungsfüllung, um Meßfehler durch leere Leitungsabschnitte zu vermeiden.

Sind erfindungsgemäß im Vorlaufgefäß zwei in Abhängigkeit vom Füllstand ansprechende Schalter einer Steuerungseinrichtung zum Öffnen und Schließen eines Absperrventils der Förderleitung und vorzugsweise eines Entlüfungsventils des Vorlaufgefäßes vorgesehen, wird auf einfache Weise ein automatischer Betrieb der Maßraumbegrenzungseinrichtung möglich, denn bei einer Flüssigkeitsübernahme steigt zuerst der Füllstand im Vorlaufgefäß, bis der oberhalb des Ausgangsfüllstandes angeordnete Schalter anspricht und das Absperrventil zur Weiterleitung der Flüssigkeit bei gleichzeitiger Massemessung öffnet. Dieses Absperrventil bleibt nun so lange offen, so lange der Flüssigkeitsstand im Vorlaufgefäß über der Ausgangsmarke liegt, und schließt, sobald der in Höhe des Ausgangspegels angeordnete zweite Schalter durch entsprechendes Absinken der Füllstandshöhe anspricht. Um den Ausfluß der Flüssigkeit aus dem Vorlaufgefäß bei geschlossener Bauart zu ermöglichen, ist an die Steuerungseinrichtung auch ein Entlüftungsventil für dieses Gefäß angeschlossen, das für die erforderliche Belüftung sorgt.

Besonders günstig ist es auch, wenn im Vorlaufgefäß ein Verdrängerkörper eingesetzt ist, da dieser Verdrängerkörper schon bei geringen Volumenunterschieden große Unterschiede in der Füllstandshöhe mit sich bringt und damit auch kleine Flüssigkeitsmengen exakt zu erfassen sind.

Gemäß einer bevorzugten Ausgestaltung der Erfindung ist die Förderanlage auf ein Tankfahrzeug aufgebaut und als Befülleinrichtung des Fahrzeugtankes vorgesehen, so daß eine fahrbare Meßanlage entsteht und jederzeit bei Flüssigkeitsübernahme, beispielsweise Milchübernahme, sofort die Masse der übernommenen Mengen bestimmt und angzeigt werden kann.

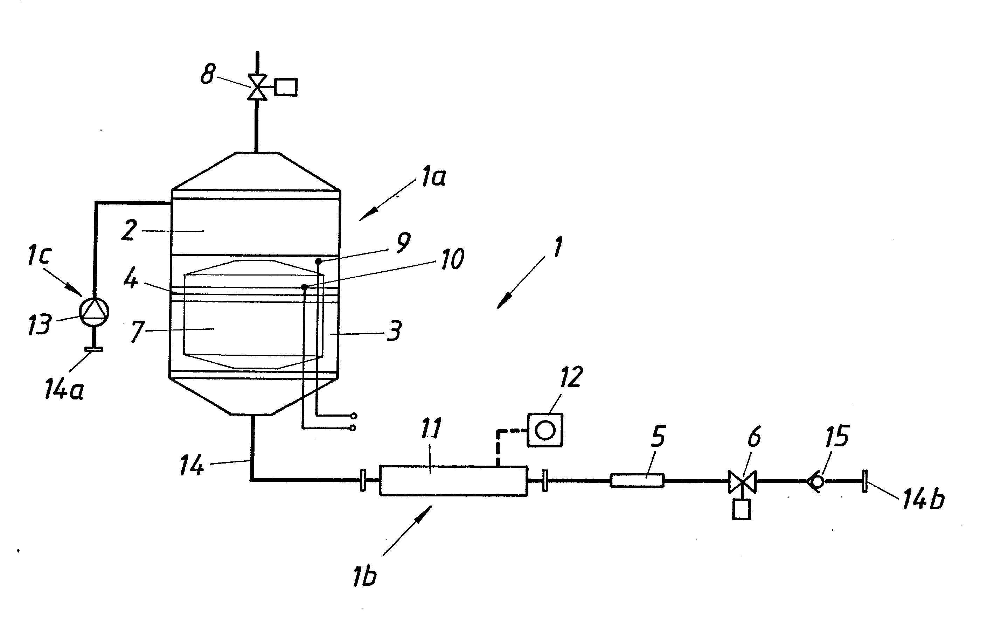

In der Zeichnung ist eine erfindungsgemäße Masse-Bestimmungsvorrichtung an Hand eines Anlagenschemas näher veranschaulicht.

Um auf einfache Weise eine direkte Massebestimmung von Milch oder anderen pump- und fließfähigen Nahrungsmitteln zu ermöglichen und unabhängig von Unterschieden der Dichte, Strömungsgeschwindigkeit, Viskosität, Temperatur u.dgl.der Flüssigkeit auch kleine Mengen mit gewünschter Genauigkeit messen zu können, sind bei der erfindungsgemäßen Masse-Bestimmungsvorrichtung 1 eine Maßraumbegrenzungseinrichtung 1a und ein Masse-Durchflußmesser 1b miteinander kombiniert. Die Maßraumbegrenzungseinrichtung 1a besteht beispielsweise aus einem Vorlaufgefäß 2 mit einem Schauglas 3 und einer Füllstandsanzeige 4 vor und einem Kontrollschauglas 5 und einem Absperrventil 6 nach dem Masse-Durchflußmesser 1b. Außerdem nimmt das Vorlaufgefäß 2 einen Verdrängerkörper 7 auf, um auch kleine Mengenunterschiede gut erfassen zu können, und zur Steuerung des Absperrventils 6 und eines Entlüftungsventils 8 des Vorlaufgefäßes 2 für eine automatischen Betrieb sind zwei in Abhängigkeit vom Füllstand ansprechende Schalter 9, 10 oberhalb eines bestimmten Ausgangspegelstandes und in Höhe dieses Pegelstandes vorgesehen.

Der Masse-Durchflußmesser 1b weist den eigentlichen Meßaufnehmer 11 und den daran angeschlossenen Meßumformer 12 auf, wobei beispielsweise ein "Danfoss MASSFLO"-Masse-Durchflußmesser aus dem Meßaufnehmer Typ MASS 1100 und dem Meßumformer Typ MASS 1000 der Firma Danfoss Verwendung findet. Mit diesem Masse-Durchflußmesser läßt sich die Masse der Flüssigkeit direkt in Kilogramm messen, ohne aufwendige Einzelmessungen von Volumen und Dichte vornehmen zu müssen.

Zur Förderung der zu messenden Flüssigkeit dient eine Förderanlage 1c, die aus einer Förderpumpe 13, einer über die Maßraumbegrenzungseinrichtung 1a und den Durchflußmesser 1b führende Förderleitung 14 und einem Rückschlagventil 15 besteht, wobei ansaugseitig ein Übernahmestutzen 14a zum Ansaugen der zu übernehmenden Flüssigkeit und abgabeseitig ein Abgabestutzen 14b zum Anschluß der Förderleitung an einen nicht weiter dargestellten Aufnahmetank od.dgl. oder zur direkten Flüssigkeitsabgabe vorbereitet sind.

Um die Masse-Bestimmungsvorrichtung 1 meßbereit zu machen, muß das Vorlaufgefäß 2 bis zu einem vorbestimmten Füllstand sowie die Förderleitung 14 nach dem Vorlaufgefäß 2 und auch der Durchflußmesser 1b mit Flüssigkeit vollgefüllt sein, was durch das Kontrollschauglas 5 und das Schauglas 3 im Vorlaufgefäß 2 überprüft werden kann. Wird nun Flüssigkeit über die Förderpumpe 13 angesaugt, steigt der Füllstand im Vorlaufgefäß 2 an, bis der Flüssigkeitsspegel den Schalter 9 betätigt, der nun über eine nicht weiter dargestellte Steuerungseinrichtung das Absperrventil 6 und das Entlüftungsventil 8 öffnet. Die übernommene Flüssigkeit kann nun durch die Förderleitung 14 und den Abgabestutzen 14b in den Aufnahmetank fließen, wobei über den Masse-Durchflußmesser 1b unmittelbar die Masse der durchfließenden Flüssigkeit bestimmt wird. Ist die Flüssigkeitsübernahme beendet, sinkt der Füllstand im Vorlaufgefäß 2 ab, bis wieder der Ausgangspegel erreicht und der Schalter 10 betätigt wird, der nun seinerseits das Absperrventil 6 und das Entlüftungsventil 8 schließt. Die Masse der übernommenen Flüssigkeitsmenge ist exakt am Masse-Durchflußmesser 1b ablesbar.

**Patentansprüche**

1. Vorrichtung (1) zur Massebestimmung pump- und fließfähiger Nahrungsmittel, insbesondere Milch, mit einer Förderanlage (1c), die eine über Meßgeräte (1b) und Steuerungsorgane (6, 15) führende Förderleitung (14) aufweist, gekennzeichnet durch die Kombination der Merkmale, daß die Förderanlage (1c) eine Maßraumbegrenzungseinrichtung (1a) umfaßt und in die Förderleitung (14) ein Masse-Durchflußmesser (1b) eingebunden ist.

2. Vorrichtung nach Anspruch 1, dadurch gekennzeichnet, daß die Maßraumbegrenzungseinrichtung (1a) ein Vorlaufgefäß (2) mit einer Füllstandsanzeige, beispielsweise ein Schauglas (3, 4) vor und ein Kontrollschauglas (5) od.dgl. nach dem Masse-Durchflußmesser (1b) aufweist.

3. Vorrichtung nach Anspruch 1, dadurch gekennzeichnet, daß im Vorlaufgefäß (2) zwei in Abhängigkeit vom Füllstand ansprechende Schalter (9, 10) einer Steuerungseinrichtung zum Öffnen und Schließen eines Absperrventils (6) der Förderleitung (14) und vorzugsweise eines Entlüftungsventils (8) des Vorlaufgefäßes (2) vorgesehen sind.

4. Vorrichtung nach Anspruch 2 oder 3, dadurch gekennzeichnet, daß im Vorlaufgefäß (2) ein Verdrängerkörper (7) eingesetzt ist.

5. Vorrichtung nach einem der Ansprüche 1 - 4, dadurch gekennzeichnet, daß die Förderanlage auf ein Tankfahrzeug aufgebaut und als Befülleinrichtung des Fahrzeugtanks vorgesehen ist.

**Europäisches Patentamt**

# EUROPÄISCHER RECHERCHENBERICHT

| | EINSCHLÄGIGE DOKUMENTE | | EP 88890023.0 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | GB - A - 1 345 974 (DIESSEL)<br>* Fig. 1; Seite 2, Zeilen 75-109 *<br>-- | 1-4 | G 01 F 1/76<br>G 01 F 1/78<br>G 01 F 1/84 |
| Y | DE - B1 - 2 437 306 (JANSKI)<br>* Fig.; Spalte 2, Zeile 31 - Spalte 4 *<br>-- | 1-4 | |
| A | DE - A - 1 698 055 (TUCHENHAGEN)<br>* Seite 3, 3. Absatz; Fig. *<br>-- | 3 | |
| A | DE - A1 - 2 913 996 (SCHÖNHUBER)<br>* Fig. 1; Seite 10, letzter Absatz - Seite 11, 2. Absatz *<br>-- | 5 | |
| A | DE - A1 - 3 301 958 (UTVECKLINGS-AKTIEBOLAGET)<br>* Zusammenfassung; Seite 9, letzter Absatz - Seite 10, 1. Absatz *<br>---- | | |

| RECHERCHIERTE SACHGEBIETE (Int. Cl.4) |
|---|
| G 01 F 1/00<br>G 01 F 15/00<br>G 06 F 3/00<br>A 01 J 7/00<br>A 01 J 11/00 |

Der vorliegende Recherchenbericht wurde für alle Patentansprüche erstellt.

| Recherchenort | Abschlußdatum der Recherche | Prüfer |
|---|---|---|
| WIEN | 26-04-1988 | BURGHARDT |